# EUROPEAN PATENT APPLICATION

(11) **EP 2 560 062 A1**
(43) Date of publication of application: **20.02.2013**
(21) Application number: 11177627.4
(22) Date of filing: 16.08.2011
(51) Int. Cl.: G05B 23/02

(54) **Methods and control systems for controlling an industrial system**

(71) Applicant: ABB Research Ltd., 8050 Zürich (CH)
(72) Inventor: Timsjö, Susanne, 725 91 Västerås (SE); Pei-Breivold, Hongyu, 723 37 Västerås (SE); Azhar, Saad, 723 36 Västerås (SE)
(74) Representative: Savela, Reino Aleksi

(57) **Abstract**

It is presented a method of controlling an industrial system by means of a control system comprising a display unit. The method provides a system operator with a comprehendible overview of the status of the essentially all process variables of an industrial system, and thus provides the operator with the opportunity to immediately take action if an alarm occurs in the industrial system. The method comprises receiving (S1-1) status-related data pertaining to a status of a plurality of process variables in the industrial system; determining (S2-1) a status value for each of the plurality of process variables based on the status-related data; adjusting (S3-1) the status value for each of the plurality of process variables, thereby forming adjusted status values for each of the plurality of process variables, wherein the adjusting is performed in such a way that an adjusted status value is set to be within a predefined range of values if the associated process variable is in a normal state, and wherein an adjusted status value is set to have a value outside the predefined range of values if the associated process variable is in a state deviating from the normal state; displaying (S4-1), on the display unit, the adjusted status value of each of the plurality of process variables in a common data plot, and if at least one adjusted status value has a value outside the predefined range; receiving (S5-1) a user input for controlling the process variable associated with the at least one adjusted status value; and controlling (S5-1) the process variable based on the user input. It is also presented a control system arranged to carry out the above method, and an alternative method and control system for the same purpose.

## Description

### TECHNICAL FIELD

The present disclosure generally relates to monitoring and control of an industrial system, and in particular to methods and control systems for facilitating control of an industrial system.

### BACKGROUND

Industrial control systems, process control systems, Supervisory Control and Data acquisition (SCADA) systems and the like have displays for displaying a graphic diagram of the industrial system to operators monitoring the industrial system.

Operators may thereby be able to recognize an alarm or a trend in the industrial system and, as a result, take measures to solve the problem giving rise to the alarm or trend.

Existing industrial system control systems have several drawbacks, including having user interfaces which are non-intuitive and which provide strain injuries to the operators.

### SUMMARY

In view of the above, a general object of the present disclosure is to provide a method and a control system which improves the work environment for system operators.

Hence, in a first aspect of the present disclosure there is provided a method of controlling an industrial system by means of a control system comprising a display unit, wherein the method comprises: receiving status-related data pertaining to a status of a plurality of process variables in the industrial system; determining a status value for each of the plurality of process variables based on the status-related data; adjusting the status value for each of the plurality of process variables, thereby forming adjusted status values for each of the plurality of process variables, wherein the adjusting is performed in such a way that an adjusted status value is set to be within a predefined range of values if the associated process variable is in a normal state, and wherein an adjusted status value is set to have a value outside the predefined range of values if the associated process variable is in a state deviating from the normal state; displaying, on the display unit, the adjusted status value of each of the plurality of process variables in a common data plot, and if at least one adjusted status value has a value outside the predefined range; receiving a user input for controlling the process variable associated with the at least one adjusted status value; and controlling the process variable based on the user input.

Beneficially, by providing adjusted status values as disclosed above in a common plot a user or operator of the control system can easily detect an abnormal situation such as an alarm, which situation requires the user to act. Hence, the complete process overview is simplified, whereby the severity of an alarm situation can be reduced since the user can act quickly after the alarm has appeared, even if a plurality of process variables is being monitored simultaneously. Consequently, it is envisaged that alarm-related wear can be avoided in the equipment of the industrial system.

The industrial system may in one embodiment enable the operation of an industrial process.

In one embodiment the adjusting the status value comprises normalising the status values.

On embodiment comprises normalising the status values with respect to respective set point values.

Preferably there is also provided a computer program product comprising computer-executable components for causing a device to perform the steps recited above when the computer-executable components are run on a processing unit included in the device.

According to a second aspect of the present disclosure there is provided a control system for controlling an industrial system, wherein the control system comprises: a communications unit arranged to receive status-related data pertaining to a status of a plurality of process variables in the industrial system; a processing unit arranged to determining a status value for each of the plurality of process variables based on the status-related data, and to adjust the status value for each of the plurality of process variables, thereby forming adjusted status values for each of the plurality of process variables, wherein the processing unit is arranged to adjust the status values in such a way that an adjusted status value is set to be within a predefined range of values if the associated process variable is in a normal state, and wherein an adjusted status value is set to have a value outside the predefined range of values if the associated process variable is in a state deviating from the normal state; and a display unit arranged to display the adjusted status value of each of the plurality of process variables in a common data plot wherein the control system is arranged to receive a user input for controlling the process variable associated with the at least one adjusted status value if at least one adjusted status value has a value outside the predefined range, and wherein the control system is arranged to control the process variable based on the user input.

In one embodiment the processing unit is arranged to adjust the status values by normalising the status values.

In one embodiment the processing unit is arranged to normalise the status values with respect to respective set point values.

According to a third aspect of the present disclosure a method of controlling an industrial system by means of a control system comprising a display unit, wherein the method comprises: receiving status-related data pertaining to a status of a plurality of process variables in the industrial system, determining a status value for each of the plurality of process variables based on the status-related data; displaying, on the display unit, the status value of each of the plurality of process variables in a data plot, repeating the steps of receiving and determining; indicating that the status value is outside the predetermined accepted range by adjusting the appearance of the status value according to a first predetermined appearance adjustment on the display unit; indicating that the status value is outside the predetermined accepted range by adjusting the appearance of the status value according to a first predetermined appearance adjustment on the display unit; receiving a user input for controlling the process variable associated with the status value having been subject to the first type of status change; and controlling the process variable based on the user input.

Advantageously, the monitoring of the industrial system is thereby simplified. As a result, the severity of an alarm situation can be reduced since the user can act quickly after the alarm has appeared, even if a plurality of process variables is being monitored simultaneously. Consequently, it is envisaged that alarm-related wear can be avoided in the equipment of the industrial system.

One embodiment comprises detecting a status value change, which change provides a status value inside the predetermined accepted range of status values for the associated process variable, and adjusting the appearance, on the display unit, of the status value according to a second predetermined appearance adjustment.

Thereby the complete process overview is simplified and trends can be followed in an intuitive way.

In one embodiment the first predetermined appearance adjustment provides an indication of an alarm associated with the process variable.

In one embodiment the second predetermined appearance adjustment provides an indication of a trend associated with the process variable.

Preferably there is also provided a computer program product comprising computer-executable components for causing a device to perform the steps above with respect to the third aspect when the computer-executable components are run on a processing unit included in the device.

According to a fourth aspect of the present disclosure there is provided a control system for controlling an industrial system, wherein the control system comprises: a communications unit arranged to receive status-related data pertaining to a status of a plurality of process variables in the industrial system; a processing unit arranged to determine a status value for each of the plurality of process variables based on the status-related data; and a display unit arranged to display the status value for each of the plurality of process variables in a data plot; wherein the control system is arranged to repeatedly receive status-related data and determine status values for each of the plurality of process variables based on the status-related data, wherein the control system is arranged to repeatedly receive status-related data and determine status values for each of the plurality of process variables based on the status-related data, and to detect if a status value of a process variable is outside a predetermined accepted range of status values for the associated process variable; wherein the display unit is arranged to indicate that the status value is outside the predetermined accepted range as a result of the processing unit being arranged to adjust the appearance of the status value according to a first predetermined appearance adjustment on the display unit; and wherein the control system is arranged to receive a user input for controlling the process variable associated with the status value having been subject to the first type of status change and to control the process variable based on the user input.

In one embodiment the control system is arranged to detect a status value change, which change provides a status value inside the predetermined accepted range of status values for the associated process variable, and adjusting the appearance, on the display unit, of the status value according to a second predetermined appearance adjustment.

In one embodiment the first predetermined appearance adjustment provides an indication of an alarm associated with the process variable.

In one embodiment the second predetermined appearance adjustment provides an indication of a trend associated with the process variable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Fig. 1 is a schematic view of an industrial system and a control system with which the industrial system is arranged to interact.
Figs 2a-b shows an example of a possible scenario in accordance with a first embodiment according to the present disclosure.
Fig. 3 is a flowchart illustrating an example of a method according to the first embodiment.
Figs. 4a-b shows an example of a possible scenario in accordance with a second embodiment according to the present disclosure.
Fig. 5 is a flowchart illustrating an example of a method according to the second embodiment.

### DETAILED DESCRIPTION

The inventive concept will now be described more fully hereinafter with reference to the accompanying drawings, in which certain embodiments of the invention are shown. This inventive concept may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

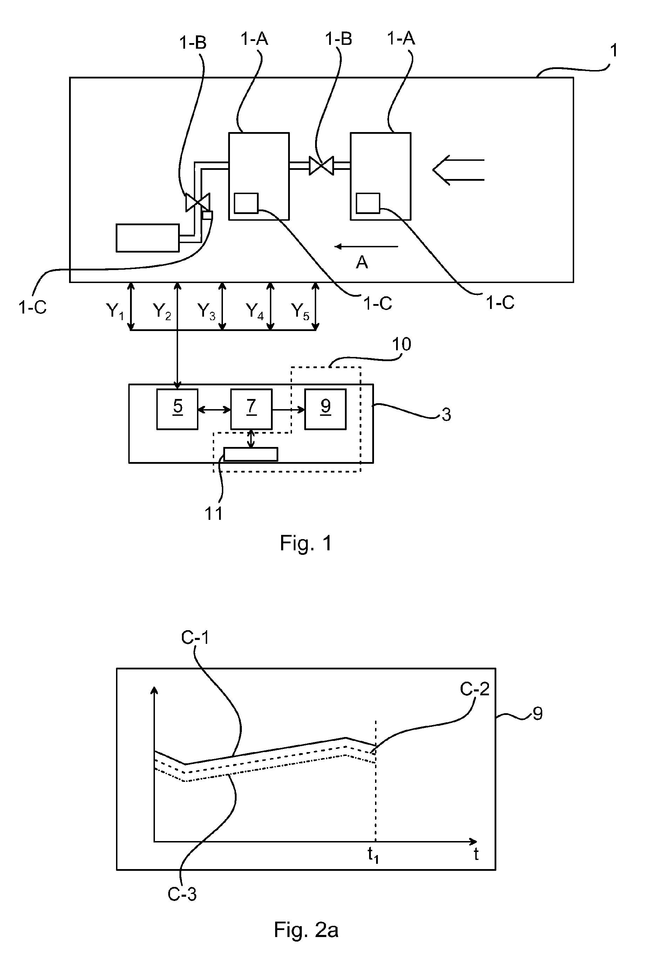

Fig. 1 schematically shows an industrial system 1 and a control system 3 arranged to be in communication with the industrial system 1 for monitoring and controlling the industrial system 1. An industrial system may in this context for instance be an electric grid or a part thereof, a pulp and paper mill, an oil refinery, a thermal power plant, a nuclear power plant, a wind farm or any production system in the process industry. It is to be noted that the present inventive concept can be utilised for monitoring and/or controlling many different types of industrial systems, with only a few examples having been given above.

In the example in Fig. 1 the industrial system comprises a plurality of tanks 1-A, valves 1-B for regulating the pressure and thus the temperature in the tanks 1-A, and sensors 1-C for measuring e.g. the pressure in the tanks 1-A. The process flow is in the direction of the arrow A, i.e. from the right to the left in the drawing.

Each object e.g. a tank or valve of the industrial system 1 has one or more object properties which can be measured and controlled. Such an object property will herein be referred to as a process variable. In the present example a process variable of a tank 1-A can for instance, and as already mentioned, be the tank pressure. The pressure in the tank 1-A can for instance be measured by means of its associated sensor 1-C. Each sensor can sense the process variable which it is arranged to measure, wherein status-related data of the process variable can be communicated to the control system 3. This way, data comprising information regarding a plurality of process variables y1, y2, y3, y4, y5 can be communicated to the control system 3 by means of a plurality of sensors 1-C.

The control system 3 comprises a communications unit 5 arranged to receive the status-related data from the sensors 1-C of the industrial system 1 and to provide control signals to the industrial system 1, a processing unit 7, a display unit 9, and an input unit 11.

The processing unit 7 may be arranged to process the status-related data received by the communications unit 5. The display unit 9 is operatively connected to the processing unit 7 such that for instance the processed status-related data can be displayed by the display unit 9.

A user interface 10 defined by the display unit 9 and the input unit 11 allows a user such as an operator to interact with the industrial system 1. In a typical situation a user provides a user input via the input unit 11, which is subsequently processed by the processing unit 7. Hereto, the user interface 10 allows for monitoring and control of the industrial system 1 via the control system 3.

In one embodiment the display unit is also the input unit. In this case the display unit may be a touch-screen device. In one embodiment, the input unit may be a gesture-based detection unit arranged to detect gestured-based input by a user. In further embodiments, the input unit may be a mouse, a keyboard or any other similar traditional input means.

The control system 3 comprises software for processing the status-related data and control software for controlling the industrial system 1 via the communications unit 5 for instance by generating control signals based on user input received from the input unit 11. In one variation the processing unit 7 comprises the above-mentioned software.

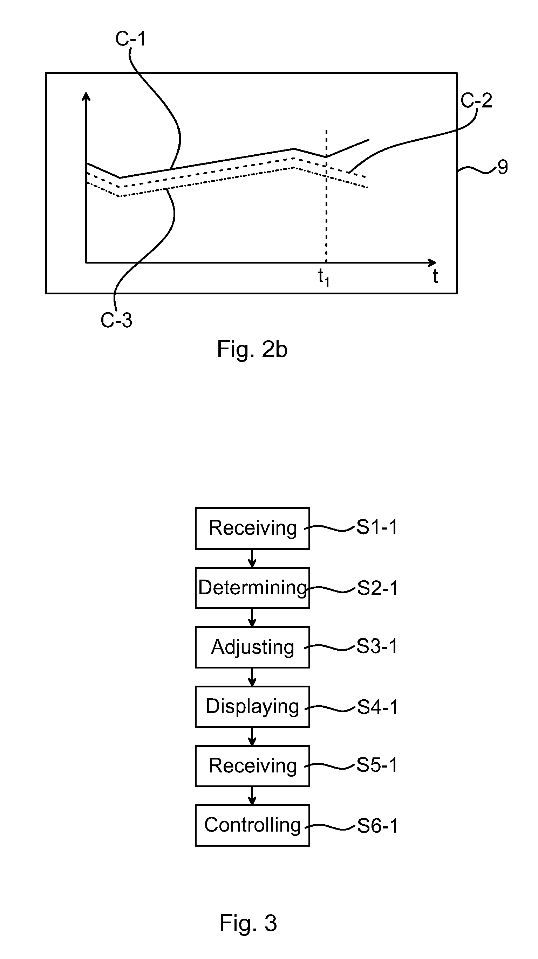

A first embodiment of a method of controlling an industrial system, such as the industrial system 1, will now be described in more detail with reference to Figs 2a-b, and Fig. 3.

In a first step S1-1, status-related data pertaining to at least one process variable, but typically a plurality of process variables, is received by the communications unit 5. The processing unit 7 receives the status-related data from the communications unit 5 and processes the status-related data such that it can be displayed on the display unit 9 in a way which provides an easy overview of the status of each process variable. It is envisaged that all process variables of the industrial system 1 can be presented in an easily comprehendible way to a user.

Beneficially, by providing easy overview of the status of each process variable, a user monitoring the industrial system 1 can easily detect an abnormal situation with respect to one or more process variables. To this end, the user can act to control the affected process variable essentially as soon as the abnormal situation has occurred.

In a second step S2-1 the processing unit 7 is arranged to determine a status value for each process variables for which status-related data has been received, based on the status-related data. In order to facilitate for the user to detect abnormalities in the industrial system 1, the processing unit 7 is arranged to adjust the status value for each process variable in a step S3-1. Thereby an adjusted status value is formed for each of the plurality of process variables.

The step S3-1 of adjusting is performed in such a way that an adjusted status value is set to be within a predefined range of values if the associated process variable is in a normal state. Moreover, an adjusted status value is set to have a value outside the predefined range of values if the associated process variable is in a state deviating from the normal state. Such a situation occurs due to an abnormal situation in the industrial system. If an abnormal situation occurs, the process variable being subject to the abnormal situation, and hence the status value of the process variable reflects the abnormal situation.

In one embodiment the step of adjusting S3-1 the status value comprises normalising the status values. The normalising of the status values can for instance be made with respect to a respective set point value relative the actual value measured by a sensor 1-C. In a fourth step S4-1 the adjusted status value of each of the plurality of process variables is displayed in a common data plot on the display unit 9, as shown in Fig. 2a. The step S3-1 of adjusting results in adjusted status value curves C-1, C-2, C-3, each comprising the adjusted status values for a specific process variable, which propagate in time in an essentially uniform manner when all the process variables are in a normal state. Each curve is typically associated with one distinct process variable. The curve C-1 can for instance describe a pressure curve for a tank 1-A with the set point of the pressure, i.e. the associated process variable, varying in time. The curves C-2 and C-3 describe other process variables. The curves C-1, C-2 and C-3 are preferably presented in such a way that a user easily can distinguish between them even during normal operation when the curves essentially overlap, as shown in Fig. 2a. To this end, in one embodiment, each curve can have different colour. In one embodiment one curve can be dashed, another curve can be an unbroken line and so on, as would be apparent to the skilled person.

If at least one adjusted status value has a value outside the predefined range, a user input may be provided by a user via the input device 11 in order to obtain control the affected equipment in the industrial system and hence of the abnormal situation which has occurred. Hereto, Fig. 2b depicts the curves C-1, C-2 and C-3 in a common plot after a time t₁ when an abnormal situation has occurred influencing the process variable represented in curve C-1. In this case, the curve C-1 deviates from the curves C-2 and C-3. This way, a user e.g. an operator can easily recognize that an abnormal situation has occurred and that the process variable associated with the curve C-1 should be controlled such that the process variable retains its set point value.

Following a user input, the processing unit 7 receives the user input comprising input data in a step S5-1, wherein the processing unit 7 can determine a suitable control signal for controlling the process variable associated with the at least one adjusted status value based on the user input. In a step S6-1 the control system 3 controls the process variable based on the user input.

The above process is typically continually repeated when the industrial system 1 is in operation. Thus, new status-related data is received continually, e.g. at predetermined intervals or essentially continuously.

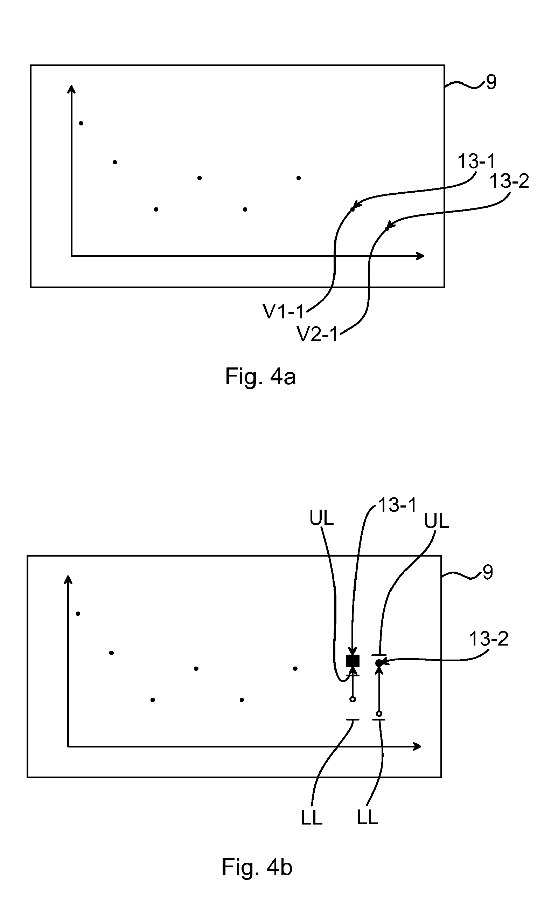

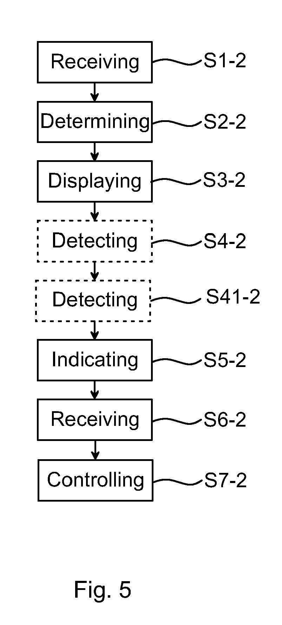

A second embodiment of a method of controlling an industrial system, such as the industrial system 1, will now be described in more detail with reference to Figs 4a-b, and Fig. 5.

In a first step S1-2, status-related data pertaining to at least one process variable, but typically a plurality of process variables, is received by the communications unit 5. The processing unit 7 receives the status-related data from the communications unit 5 and processes the status-related data such that it can be displayed on the display unit 9 in a way which provides an easy overview of the status of each process variable received by the communications unit 5, typically all process variables of the industrial system 1.

In a second step S2-2 the processing unit 7 is arranged to determine a status value for each of the plurality of process variables based on the status-related data.

In a third step S3-2 the display unit 9 displays the status value of each of the plurality of process variables in a data plot. Each dot in Figs 4a-b represents a status value, but for clearness only two status values 13-1 and 13-2 are referred to with reference numbers. For the sake of the present example, the status values 13-1 and 13-2 have been determined to have values V1-1 and V2-1 respectively.

The steps of receiving S1-2 and determining S2-2 is repeated such that up-to-date status values can be presented on the display unit 9. Preferably, the steps S1-2 and S2-2 are continually repeated when the industrial system 1 is in operation. Thus, new status-related data is received continually, e.g. at predetermined intervals or essentially continuously.

As new values V1-2 and V2-2 for status values 13-1 and 13-2, respectively, are determined for the associated process variables, the new values V2-1 and V2-2 are displayed on the display screen 9. In the present example, the new value V1-2 is outside a predetermined range of status values for the associated process variable, which is shown in Figs 4a and 4b by means of a predetermined upper limit UL and a predetermined lower limit LL defining a predetermined range of acceptable status values within a normal state of operation. It is to be noted that in a typical embodiment, the UL and LL are not displayed by the display unit; they are shown here in order to facilitate the understanding of the underlying principles of the second embodiment.

In the example, the new value V2-1 has a value outside the predetermined range of values between UL and LL. To this end, the processing unit 7 detects a first type of status value change of the status value 13-1 of a process variable in a step S4-2. The first type of status value change pertains to an abnormal situation in the industrial system 1 generating e.g. an alarm.

In a step S5-2 the display unit 9 indicates that the status value 13-1 is outside the predetermined accepted range by adjusting the appearance of the status value according to a first predetermined appearance adjustment on the display unit, as shown in Fig. 4b. In one variation, the adjusting of the appearance can for instance involve changing the colour or shape of the status value dot.

If additional status values have changed since the last update, i.e. since the previous reception of status-related data, the processing unit 7 detects such changes. In the present example, a second type of status value change of a status value of a process variable is detected in a step S41-2. The second type of status change is a status value change which provides a status value which is inside the predetermined accepted range of status values for the associated process variable. In the example of Figs 4a-b, the status value 13-2 is subject to a change in value from a value V2-1 to a value V2-2. The value V2-2 is within the predetermined range defined by the upper limit UL and the lower limit LL of the process variable associated with that status value. To this end, the appearance of the status value is adjusted according to a second predetermined appearance adjustment. In one variation the second type of appearance adjustment comprises leaving a trace of the previous value V2-1 of the status value 13-2 and displaying the new value V2-2. By leaving a trace, a user can follow a trend involving the underlying process variable. The trace may in one variation be in the form of a grey scale with the oldest status values being lighter than the newer status values for the associated process variable.

If e.g. a status value is outside the predetermined range, the input unit 11 can receive a user input in a step S6-2 for controlling the process variable associated with the status value having been subject to the first type of status change, e.g. status value 13-1.

In a step S7-2 the control system 3 is arranged to control the process variable associated with the status value 13-1 based on the user input.

It is to be noted that the steps can be carried out in a different order than has been presented above. The step S41-2 can for instance be carried out at any time when such a status value is detected.

The invention concept has mainly been described above with reference to a few embodiments. However, as is readily appreciated by a person skilled in the art, other embodiments than the ones disclosed above are equally possible within the scope of the invention, as defined by the appended patent claims.

## Claims

1. A method of controlling an industrial system (1) by means of a control system (3) comprising a display unit (9), wherein the method comprises:
receiving (S1-1) status-related data pertaining to a status of a plurality of process variables in the industrial system,
determining (S2-1) a status value for each of the plurality of process variables based on the status-related data,
adjusting (S3-1) the status value for each of the plurality of process variables, thereby forming adjusted status values for each of the plurality of process variables, wherein the adjusting is performed in such a way that an adjusted status value is set to be within a predefined range of values if the associated process variable is in a normal state, and wherein an adjusted status value is set to have a value outside the predefined range of values if the associated process variable is in a state deviating from the normal state,
displaying (S4-1) , on the display unit (9), the adjusted status value of each of the plurality of process variables in a common data plot, and if at least one adjusted status value has a value outside the predefined range,
receiving (S5-1) a user input for controlling the process variable associated with the at least one adjusted status value, and
controlling (S6-1) the process variable based on the user input.

2. The method as claimed in claim 1, wherein the adjusting the status value comprises normalising the status values.

3. The method as claimed in claim 2, comprising normalising the status values with respect to respective set point values.

4. A computer program product comprising computer-executable components for causing a device to perform the steps recited in any one of claims 1-3 when the computer-executable components are run on a processing unit included in the device.

5. A control system (3) for controlling an industrial system (1), wherein the control system (3) comprises:
a communications unit (5) arranged to receive status-related data pertaining to a status of a plurality of process variables in the industrial system (1),
a processing unit (7) arranged to determining a status value for each of the plurality of process variables based on the status-related data, and to adjust the status value for each of the plurality of process variables, thereby forming adjusted status values for each of the plurality of process variables, wherein the processing unit is arranged to adjust the status values in such a way that an adjusted status value is set to be within a predefined range of values if the associated process variable is in a normal state, and wherein an adjusted status value is set to have a value outside the predefined range of values if the associated process variable is in a state deviating from the normal state, and
a display unit (9) arranged to display the adjusted status value of each of the plurality of process variables in a common data plot,
wherein the control system (3) is arranged to receive a user input for controlling the process variable associated with the at least one adjusted status value if at least one adjusted status value has a value outside the predefined range, and wherein the control system (3) is arranged to control the process variable based on the user input.

6. The control system (3) as claimed in claim 5, wherein the processing unit (7) is arranged to adjust the status values by normalising the status values.

7. The control system (3) as claimed in claim 6, wherein the processing unit (7) is arranged to normalise the status values with respect to respective set point values.

8. A method of controlling an industrial system (3) by means of a control system (3) comprising a display unit (9), wherein the method comprises:
receiving (S1-2) status-related data pertaining to a status of a plurality of process variables in the industrial system,
determining (S2-2) a status value for each of the plurality of process variables based on the status-related data,
displaying (S3-2), on the display unit (9), the status value of each of the plurality of process variables in a data plot,
repeating the steps of receiving (S1-2) and determining (S2-2),
detecting (S4-2) that a status value of a process variable is outside a predetermined accepted range of status values for the associated process variable,
indicating (S5-2) that the status value is outside the predetermined accepted range by adjusting the appearance of the status value according to a first predetermined appearance adjustment on the display unit,
receiving (S6-2) a user input for controlling the process variable associated with the status value having been subject to the first type of status change, and
controlling (S7-2) the process variable based on the user input.

9. The method as claimed in claim 8, comprising detecting (S41-2) a status value change, which change provides a status value inside the predetermined accepted range of status values for the associated process variable, and adjusting the appearance, on the display unit, of the status value according to a second predetermined appearance adjustment.

10. The method as claimed in claim 8 or 9, wherein the first predetermined appearance adjustment provides an indication of an alarm associated with the process variable.

11. The method as claimed in claim 9 or 10, wherein the second predetermined appearance adjustment provides an indication of a trend associated with the process variable.

12. A computer program product comprising computer-executable components for causing a device to perform the steps recited in any one of claims 8-11 when the computer-executable components are run on a processing unit included in the device.

13. A control system (3) for controlling an industrial system (1), wherein the control system (3) comprises:
a communications unit (5) arranged to receive status-related data pertaining to a status of a plurality of process variables in the industrial system (1),
a processing unit (7) arranged to determine a status value for each of the plurality of process variables based on the status-related data, and
a display unit (9) arranged to display the status value for each of the plurality of process variables in a data plot,
wherein the control system (3) is arranged to repeatedly receive status-related data and determine status values for each of the plurality of process variables based on the status-related data, and to detect if a status value of a process variable is outside a predetermined accepted range of status values for the associated process variable,
wherein the display unit (9) is arranged to indicate that the status value is outside the predetermined accepted range as a result of the processing unit being arranged to adjust the appearance of the status value according to a first predetermined appearance adjustment on the display unit, and
wherein the control system (3) is arranged to receive a user input for controlling the process variable associated with the status value having been subject to the first type of status change and to control the process variable based on the user input.

14. The control system (3) as claimed in claim 13, arranged to detect a status value change, which change provides a status value inside the predetermined accepted range of status values for the associated process variable, and adjusting the appearance, on the display unit (9), of the status value according to a second predetermined appearance adjustment.

15. The control system (3) as claimed in claim 13 or 14, wherein the first predetermined appearance adjustment provides an indication of an alarm associated with the process variable.

16. The control system (3) as claimed in claim 14 or 15, wherein the second predetermined appearance adjustment provides an indication of a trend associated with the process variable.
